Europäisches Patentamt

European Patent Office

Office européen des brevets

(19)

(11) Publication number: **0 068 757**
**B1**

(12)

# EUROPEAN PATENT SPECIFICATION

(45) Date of publication of patent specification: **09.10.85**

(51) Int. Cl.⁴: **G 11 B 7/08**

(21) Application number: **82303189.3**

(22) Date of filing: **18.06.82**

(54) **Objective lens assemblies for optical disc players.**

(30) Priority: **22.06.81 JP 96248/81**

(43) Date of publication of application:
**05.01.83 Bulletin 83/01**

(45) Publication of the grant of the patent:
**09.10.85 Bulletin 85/41**

(84) Designated Contracting States:
**DE FR GB NL SE**

(56) References cited:
**EP-A-0 057 070**
**US-A-4 135 083**

(73) Proprietor: **SONY CORPORATION**
**7-35 Kitashinagawa 6-Chome Shinagawa-ku
Tokyo 141 (JP)**

(72) Inventor: **Yano, Hajime
1-24-6 Numabukuro
Nakano-ku Tokyo (JP)**
Inventor: **Tsurushima, Katsuaki
2444-65 Ohzenji Tama-ku
Kawasaki-shi Kanagawa-ken (JP)**

(74) Representative: **Thomas, Christopher Hugo
et al
D. Young & Co 10 Staple Inn
London WC1V 7RD (GB)**

Courier Press, Leamington Spa, England.

## Description

This invention relates to objective lens assemblies particularly, but not exclusively, suited for use in optical disc players in which a light beam is directed against a disc or other record medium surface for optically reading information recorded in a track on the surface.

It has been previously proposed in our European patent application EP—A2—0 057 070 (published on 4 August 82, comprised in the state of art pursuant Art 54(3)(4)) to provide an objective lens assembly for an optical disc player in which an objective lens is eccentrically mounted in an annular lens mount from which a cylindrical body depends, the cylindrical body being slidable within a cylindrical bearing for both axial and rotary movements. The cylindrical bearing is secured within an inner cylindrical yoke to which an outer cylindrical yoke is connected, at the bottom, by an annular yoke connection, and an annular magnet is interposed in the outer yoke to complete a magnetic circuit in which magnetic flux extends across an upwardly opening annular space or gap defined between the inner and outer yokes. The outer annular yoke has a pair of diametrically opposed cut-outs therein so that the magnetic flux or field between the inner and outer yokes will be very substantially reduced in the regions of such cut-outs. A flange extends radially outward from the periphery of the lens mount, and a cylindrical bobbin depends axially from the outer periphery of the flange into the annular gap between the inner and outer yokes. A focusing coil is wound circumferentially around the outer surface of the cylindrical bobbin so that a driving current flowing in the focusing coil can coact with the magnetic flux extending across the gap for causing axial displacement of the objective lens parallel to the central axis of the cylindrical body and bearing. Also mounted on the cylindrical bobbin are substantially rectangular tracking coils having first and second portions extending substantially parallel to the axis of the cylindrical body and bearing and through which a driving current supplied to the tracking coils will flow in opposed directions, with the first portions of the tracking coils being located between the inner and outer yokes for interacting with the magnetic flux and thereby effecting desired rotary movements in response to the driving current, while the second portions of the tracking coils are located adjacent to the cut-outs in the outer yoke for reducing the electromagnetically induced force tending to oppose such desired rotary movements.

When the above-described lens assembly is in use, a light beam, in passing through the objective lens, extends longitudinally through the cylindrical body and a focusing error signal may be applied to the focusing coil for effecting axial movements of the cylindrical body within the bearing to cause corresponding movements of the objective lens for correcting focusing errors. Further, in response to a tracking error signal applied to the tracking coils, the resulting driving current flowing through the tracking coils interacts with the magnetic flux for turning the cylindrical body relative to the bearing, and the eccentricity of the objective lens relative to the cylindrical body may be in a direction to cause displacement of the optical axis of the objective lens in the radial direction of the record disc being scanned for correcting a tracking error.

However, it has been found that the above-described objective lens assembly has less sensitivity than may be desired, particularly in respect of the correction of tracking errors, and that the arrangement of the lens assembly inherently limits the increases in sensitivity that may be achieved therewith. The sensitivity of the assembly for correcting tracking errors can be increased by:

(1) increasing the eccentricity of the objective lens, that is, the radial distance between the optical axis of the lens and the axis about which the lens mount is turned for correcting tracking errors;

(2) reducing the frictional resistance to turning of the objective lens mount;

(3) increasing the driving torque of the rotating motor formed by the tracking coils and the magnetic circuit; and

(4) reducing the weight of the structure supporting the objective lens and movable therewith for correcting tracking errors.

However, in the case of the previously proposed objective lens assembly described above, since the path of the light beam through the objective lens extends axially within the cylindrical body which is rotatable within the cylindrical bearing, any increase in the eccentricity of the objective lens relative to the axis of rotary movement requires a corresponding increase in the diameters of the cylindrical body and bearing, as a result of which there is a corresponding increase in the frictional resistance to the rotary movements for correcting tracking errors and also an increase in the weight of the supporting structure movable with the objective lens. Such increases in frictional resistance to the rotary movements and in the weight of the structure that needs to be moved more than overcome the advantageous increase in eccentricity and any increase in the driving torque of the rotating motor achieved by increasing the diameter of the bobbin on which the tracking coils are mounted. Therefore, substantial improvements in the sensitivity of the lens assembly for correcting tracking errors are not to be expected from increasing the eccentricity of the lens.

Furthermore, since the cylindrical bearing which guides the cylindrical body supporting the lens mount is secured to the inner surface of the inner yoke, a leakage flux is generated towards the cylindrical body and bearing from the flanks of the outer yoke defining the cut-outs. Such leakage flux reduces the density of the remaining magnetic flux available to coact with the first portions of the tracking coils for causing the desired rotary movements to correct a tracking error. Moreover, the leakage flux will undesirably coact with the second portions of the tracking coils situated adjacent to the cut-outs for decreasing the driving torque in the desired direction.

According to the present invention there is prvided a lens assembly comprising:

a non-magnetic body member having an end wall with a substantially circular periphery and a cylindrical side wall depending from the periphery of said end wall;

support means including a base member located under said body member and cooperatively engageable bearing members extending from said end wall and from said base member, respectively, close to the central axis of said side wall and being relatively movable to permit at least rotary movements of said body member relative to said base member about said central axis;

a lens mounted eccentrically in said end wall radially between said side wall and said bearing members with the optical axis of said lens extending parallel to said central axis;

inner and outer yoke means extending upwardly from said base member at the inside and outside, respectively, of said side wall with radial clearance therebetween, at least said outer yoke means having a gap therein;

magnet means associated with said yoke means for generating magnetic flux through said side wall of said body member between said inner and outer yoke means;

coil means on said side wall of said body member and shaped to have first and second portions extending substantially parallel to said central axis and through which a driving current supplied to said coil means will flow in opposed directions, each of said first portions of said coil means being located between said inner and outer yoke means for interacting with said magnetic flux and thereby effecting said rotary movements in response to said driving current, each said second portion of said coil means being located adjacent to said gap to be substantially free of said magnetic flux; and

means defining a path through said inner yoke means for a light beam directed substantially along said optical axis of the lens and passing between said bearing members and said side wall.

The invention will now be described by way of example with reference to the accompanying drawings, throughout which corresponding parts are identified by the same reference numerals, and in which:

Figure 1 is an exploded perspective view of an embodiment of objective lens assembly according to the invention;

Figure 2 is a perspective view of the lens assembly of Figure 1 shown in its assembled condition;

Figure 3 is a vertical sectional view of the lens assembly of Figure 2;

Figure 4 is a horizontal sectional view taken along the line IV—IV in Figure 3; and

Figures 5 to 7 are fragmentary perspective views illustrating respective resilient positioning members in respective other embodiments of objective lens assembly according to the invention, and which are otherwise similar to the embodiment of Figures 1 to 4.

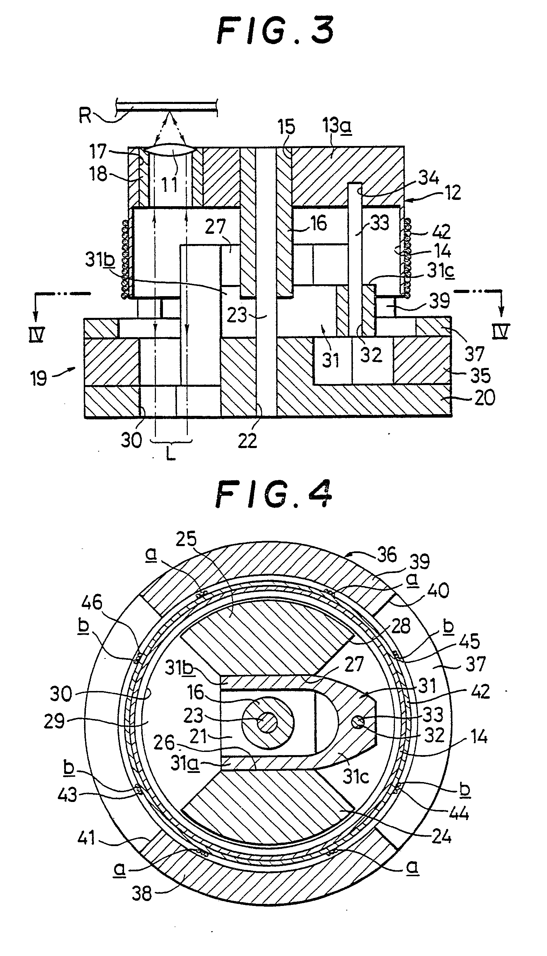

Referring initially to Figure 3, it will be seen that, in an optical disc player or other apparatus having an optical lens assembly 10 according to an embodiment of the invention, a light beam L, preferably from a laser (not shown), is directed against a surface of a record medium R for optically reading information recorded in a track on the surface, and an objective lens 11 is interposed in the path of the light beam L so as to have the central or optical axis of the lens 11 generally parallel to the direction of passage of the light beam therethrough.

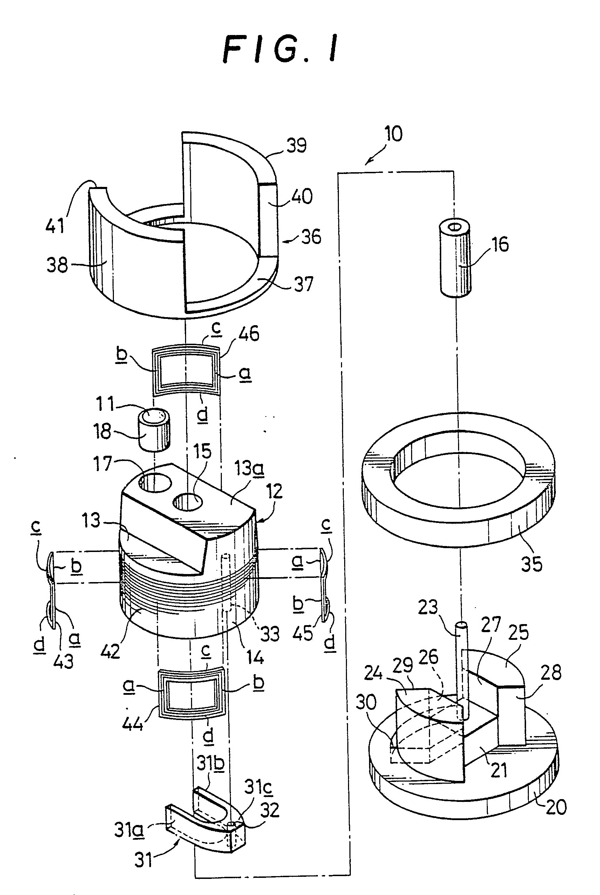

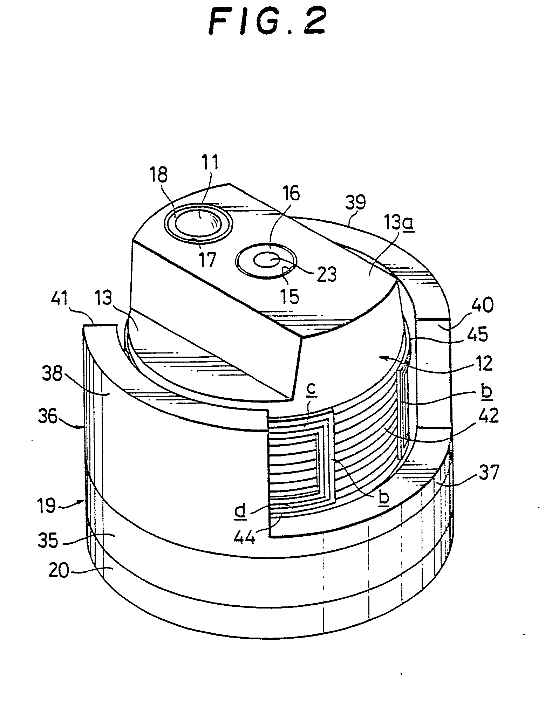

The lens 11 is carried by a movable body member 12 having a substantially circular end wall 13 and a cylindrical side wall or barrel 14 depending from the periphery of the end wall 13. The end wall 13 is shown, particularly in Figures 1 and 2, to have a diametrically extending raised portion or rib 13a integral therewith and formed with a centrally located bore 15 extending vertically therethrough. A relatively small-diameter bearing sleeve 16, for example, of ceramic or self-lubricating synthetic resin, such as nylon or polyacetal, has its upper end portion fixed in the bore 15, as by a suitable adhesive, so that the bearing sleeve 16 is coaxial with the axis of the side wall 14. The body member 12 may be formed of aluminium, duralumin or another non-magnetic metal of low specific gravity. However, in order to avoid generation of eddy currents, it is preferable to use non-metallic material, such as a ceramic or a synthetic resin, at least for the side wall 14 of the body member 12.

The raised portion 13a of the end wall 13 is further formed with a bore 17 extending vertically therethrough and being eccentrically located, that is, having its axis substantially spaced radially from the central axis of the side wall 14 and the bearing sleeve 16. The lens 11 is secured in a mounting tube 18 which is, in turn, suitably fixed in the bore 17 so that the optical axis of the lens 11 is spaced by a substantial radial distance from the central axis of the side wall 14 and the bearing sleeve 6.

The objective lens assembly 10 further comprises a fixed member 19 comprising a circular base 20 formed, at its centre, with a raised portion or cradle 21 (Figures 1, 3 and 4). A central bore 22 is formed vertically in the cradle 21, and the lower end portion of a metal shaft 23 of relatively small diameter is suitably fixed in the bore 22 so that the shaft 23 projects vertically from the base 20. The shaft 23 is slidably received in the bore of the bearing sleeve 16 so that the body member 12 is thereby mounted above the base 20 for rotary movements about the axis of the shaft 23 and for axial or vertical movements relative to the base 20.

A pair of inner yoke members 24 and 25 extend upwardly from the base 20 at opposite sides of the cradle 21 (Figures 1 and 4) and are formed of a magnetic material integrally with the base 20 and the cradle 21. The inner yoke members 24 and 25 extend above the cradle and are substantially of sector-shaped configuration. More particularly, the inner yoke members 24 and 25 have arcuate outer surfaces forming respective portions of a cylindrical surface, radially extending end surfaces which, for each of the inner yoke members 24 and 25, include an angle of about 90°, and spaced apart, confronting parallel inner surfaces 26 and 27, respectively, which extend above the cradle 21. Thus, it will be seen that an inner yoke defined by the inner yoke members 24 and 25 on the base 20 has a pair of diametrically opposed gaps or cut-outs 28 and 29 defined between the radially extending surfaces at the opposite adjacent ends of the inner yoke members 24 and 25. The base 20 further has a sector-shaped aperture 30 extending therethrough and substantially coextensive with the gap 29 between the inner yoke members 24 and 25.

The side wall 14 of the body member 12 is diametrically dimensioned so that, when the bearing sleeve 16 is slidably disposed on the shaft 23, the inner yoke members 24 and 25 extend upwardly into the body member 12 at the inside of the side wall 14 with a relatively small clearance therebetween, as shown particularly in Figure 4. The radial distance from the optical axis of the lens 11 in the end wall 13 to the axis of the shaft 23 is selected so that the path of the light beam L, in travelling parallel to the axis of the shaft 23 to and from the lens 11, extends through the body member 12 between the bearing sleeve 16 and the side wall 14, and also with substantial clearance through the gap 29 in the inner yoke and the aperture 30 in the base 20.

In order yieldably to hold the body member 12 in a neutral position both with respect to its rotary movements about the shaft 23 and with respect to axial movements along the shaft 23, the objective lens assembly 10 includes a resilient positioning member 31 (Figures 1, 3 and 4) which is generally of U-shaped configuration so as to have spaced apart substantially parallel legs 31a and 31b adhered, as by an epoxy resin, to the inner surfaces 26 and 27, respectively, immediately above the cradle 21, and a curved connecting portion 31c extending beyond the cradle 21 into the cut-out 28. A vertical hole 32 is formed in the connecting portion 31c to receive the lower end portion of a support pin 33 which, at its upper end, is received, for example, with a press-fit, in a downwardly opening vertical socket 34 formed in the raised portion 13a of the end wall 13 along a diametrical line which extends through the axis of the bore 17. The resilient positioning member 31 is preferably formed of a high polymer resin, such as, polyurethane, and, during assembly of the body member 12 on the base 20, that is, when the bearing sleeve 16 is being fitted downwardly over the shaft 23, the pin 33 has adhesive applied to its lower end portion to be fixed thereby in the bore 32 of the positioning member 31.

The fixed member 19 of the objective lens assembly 10 includes a ring-shaped magnet 35 which is suitably fixed on the upper surface of the base 20 adjacent to the outer periphery, and an outer yoke 36 of magnetic material which includes a ring 37 suitably fixed immediately on top of the magnet 35, and diametrically opposed, arcuate outer yoke members 38 and 39 which extend upwardly from the ring 37, and which each have an angular extent of approximately 90°. The magnet 35 and the ring 37 of the outer yoke 36 are diametrically dimensioned so that the outer yoke members 38 and 39 extend upwardly at the outside of the side wall 14 to the body member 12 with a radial clearance therebetween, as particularly shown in Figure 4. The ring 37 is circumferentially positioned with respect to the base 20 so that the outer yoke members 38 and 39 are radially aligned with the inner yoke members 24 and 25, respectively. Since the outer yoke members 38 and 39 each have an angular extend of approximately 90° and are positioned so as to be diametrically opposed, the outer yoke 36 has diametrically opposed gaps or cut-outs 40 and 41 which are substantially aligned radially with the cut-outs 28 and 29, respectively, of the inner yoke.

A focusing coil 42 is wound circumferentially about, and secured, as by a suitable adhesive, to the outer surface of the side wall 14 of the body member 12 so as to be disposed in the clearance between the side wall 14 and the outer yoke members 38 and 39. Tracking coils 43, 44, 45 and 46, which are preferably of substantially rectangular configuration, as shown in Figure 1, are also mounted on the side wall 14, for example, by being adhesively secured to the surface of the focusing coil 42. Each of the tracking coils 43 to 46 is shown in Figure 1 to include first and second opposite side portions a and b extending parallel to the central axis of the side wall 14 and curved top and bottom portions c and d connecting the respective side portions a and b and extending circumferentially on the side wall 14. The tracking coils 43 to 46 are spaced apart equally about the circumference of the side wall 14 and arranged so that lines extending from the centres of the tracking coils 43 to 46 to the central axis of the side wall 14 enclose angles of 45° with respect to the longitudinal median of the raised portion 13a on end wall 13. The tracking coils 43 to 46 are further connected with each other so that a tracking error signal applied to the tracking coils 43 to 46 will cause a driving current to flow in opposed directions through portions a and b, respectively, of the tracking coils 43 to 46. More specifically, the tracking coils 43 to 46 are arranged, so that the portions a of the tracking coils 43 and 44, respectively, are positioned between the inner and outer yoke members 24 and 38, and the portions a of the tracking coils 45 and 46 are positioned between the inner and outer yoke members 25 and 39. Furthermore, the portions b of the tracking coils 44 and 45 are adjacent to or between the gaps 28 and 40 in the inner and outer yokes, respectively, while the portions b of the tracking coils 43 and 46 are adjacent to or between the gaps 29 and 41 of the inner and outer yokes.

It will be appreciated that the inner yoke members 24 and 25 on the base 20, the magnet 35 and the outer yoke 36 form a magnetic circuit for generating magnetic flux across the spaces between the inner and outer yoke members 24 and 38 and between the inner and outer yoke members 25 and 39, respectively, and hence through the side wall 14 in such spaces. The focusing coil 42 is arranged to interact with this magnetic flux to form a linear motor by which the body member 12 is displaced in the axial direction in response to the passage of a suitable driving current through the focusing coil 42, thereby to change or correct the focus of the light beam L by the lens 11. On the other hand, the portions a of the tracking coils 43 to 46 are arranged to coact with the magnetic flux between the yoke members 24 and 38 and between the yoke members 25 and 39 to form a rotary motor for effecting rotational or angular displacements of the body member 12 about the axis of the shaft 23 in response to the supplying of a driving current to the tracking coils 43 to 46. If the longitudinal median of the raised portion 13a of the end wall 13 is arranged generally tangential with respect to a track on the record medium R which is being scanned, then rotation or angular displacements of the body member 12 about the axis of the shaft 23 will effect movements of the lens 11 transversely with respect to the scanned record track, for example, for effecting tracking corrections.

It will be appreciated that, in the described embodiment, the movements of the body member 12 in the direction of the axis of the shaft 23 for effecting focusing corrections, and the rotary or angular movements of the body member 12 about the axis of the shaft 23 for effecting tracking corrections, are yieldably resisted by the resilient positioning member 31 which is effective to return the body member 12 both axially and rotationally to its neutral position when driving currents are no longer supplied to the focusing coil 42 and to the tracking coils 43 to 46. Since the resilient positioning member 31 is formed of a high polymer, such as polyurethane, it does not become resonant in response to movements of the body member 12 by focusing and tracking error signals applied to the coils 42 to 46. Therefore, sensitivity in correcting focusing and tracking errors is not degraded. Furthermore, since the resilient positioning member 31 is housed within the gap 28 between the inner yoke members 24 and 25, the resilient positioning member 31 does not interfere with attainment of an objective lens assembly of compact size.

Since the inner yoke members 24 and 25 are radially aligned with the outer yoke members 38 and 39, respectively, the gaps 28 and 29 in the inner yoke are radially aligned with the gaps 40 and 41, respectively, in the outer yoke 36 with the result that only an extremely small leakage flux, if any acts on the portions b of the tracking coils 43 to 46 which are disposed adjacent thereto. Since the leakage flux is minimized, the density of the remaining magnet flux extending between the yoke members 24 and 38 and between the yoke members 25 and 39 and which coacts with the portions a of the tracking coils 43 to 46 is substantially increased. Moreover, the absence of any significant leakage flux for interacting with driving current flowing through the portions b of the tracking coils 43 to 46 serves to reduce to a minimum the torque that is generated in opposition to the desired torque resulting from the interaction of the driving current flowing through the portions a of the tracking coils 43 to 46 with the magnetic flux between the yoke members 24 and 38 and the yoke members 25 and 39. Therefore, the effective or desired driving torque of the so-called rotary motor is increased. It will also be appreciated that, since the lens 11 is positioned between the side wall 14 of the body member 12 which carries the tracking coils 42 to 46 and the bearing sleeve 16 which mounts the body member 12 for movement on the shaft 23, the eccentricity of the lens 11 relative to the axis of the shaft 23 can be increased to a maximum without increasing the diameter of the cylindrical surface at which the bearing sleeve 16 engages the shaft 23, and hence without increasing the frictional resistance to angular or rotary movements of the body member 12. Therefore, tracking control can be performed with a minimum angle of rotation of the body member 12 so as to improve the sensivity of tracking correction.

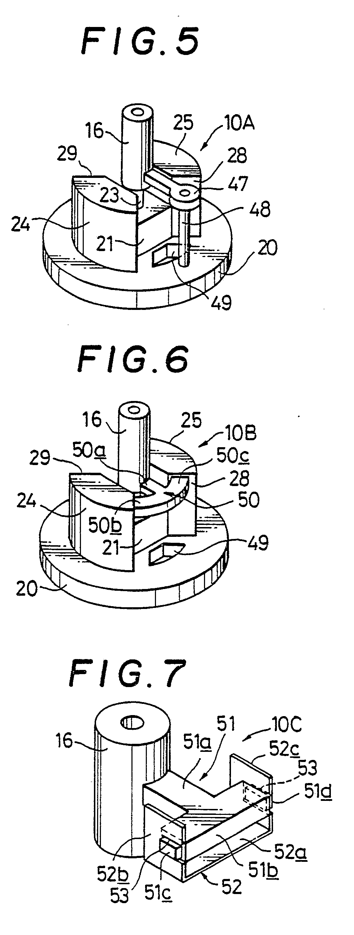

Referring now to Figure 5, in an objective lens assembly 10A for another embodiment of the invention which is otherwise similar to the assembly 10, the resilient positioning member 31 is replaced by a resilient positioning member in the form of a resilient arm 47 adhesively secured, at one end, to the lower end portion of the bearing sleeve 16 and extending radially outward therefrom in the gap 28 of the inner yoke. The outer end portion of the arm 47 is adhesively secured to the upper end portion of a pin 48 extending upwardly from the upper surface of the base 20 to which the pin 48 is suitably fixed. An aperture 49 is formed through the base 20 adjacent to the pin 48 so that, upon assembly of the bearing sleeve 16 of the body member 12 (not shown in Figure 5) on the shaft 23, a jig can be inserted through the aperture 49 for accurately positioning the arm 47 relative to the bearing sleeve 16 at the time when the adhesive connection therebetween is effected. The aperture 49 further permits inspection therethrough of the arm 47 for determining its condition and the security of its connection to the bearing sleeve 16 and the pin 48.

Referring now to Figure 6, in an objective lens assembly 10B for another embodiment of this invention which is otherwise similar to the assembly 10, a resilient positioning member 50 is provided with a substantially T-shaped configuration. Resilient positioning member 50 has a stem portion 50a adhesively secured, at its end, to the lower end portion of the bearing sleeve 16 and extending radially therefrom, and a head or cap portion extending across the gap 28 between the inner yoke members 24 and 25, with ends 50b and 50c of the head portion being adhesively secured to the angled end surfaces of the inner yoke members 24 and 25 which define the limits of the gap 28. In this embodiment, the base 20 again has an aperture 49 through which a suitable jig can be inserted for resilient positioning member 50 when it is being adhesively secured to the bearing sleeve 16 and to the inner yoke members 24 and 25.

Referring now to Figure 7, in an objective lens assembly 10C for still another embodiment of this invention which is otherwise similar to the assembly 10, the resilient positioning member 31 and the pin 33 of the assembly 10 are replaced by a resilient positioning member 51 of T-shaped configuration secured to the bearing sleeve 16 and a bracket 52 secured to the base 20 (not shown) and arranged automatically to engage the resilient positioning member 51 in response to assembling of the body member 12 (not shown) on the base 20. More particularly, the resilient positioning member 51 is shown to have the end of its stem portion 51a adhesively secured to the bearing sleeve 16 so that the stem portion 51a extends radially from the bearing sleeve 16 within the gap 28 of the inner yoke. The head portion 51b of the resilient positioning member 51 has reduced or stepped-down ends 51c and 51d, and the bracket 52 is of U-shaped configuration so as to have a base portion 52a suitably fixed on the base 20 and upwardly directed side portions 52b and 52c formed with cut-outs 53, respectively. The cut-outs 53 are dimensioned closely to receive the stepped-down ends 51c and 51d of resilient positioning member 51, and the distance between the side portions 51b and 51c of the bracket 52 is made slightly less than the non-stressed distance between the faces of the stepped-down ends 51c and 51d. Thus, when the bearing sleeve 16 is being slidably moved downwardly on the shaft 23 during assembly of the body member 12 on the base 20, the stepped-down ends 51c and 51d of the head portion 51b are initially squeezed towards each other to fit between the side portions 52b and 52c of the bracket 52. As the downward movement of the body member 12 continues, the stepped-down ends 51c and 51d of the resilient positioning member 51 snap into the respective cut-outs 53 of the bracket 52, thereby to establish the neutral position of the body member 12 relative to the base 20. Thus, it will be seen that assembling of an embodiment corresponding to Figure 7 is easily effected and there is no need to provide an aperture 49 (Figures 5 and 6) for the insertion of an assembling jig.

Although the side wall 14 of the body member 12 has been described and shown as being formed apart from the coils 42 to 46 which are thereafter adhesively secured on the side wall 14, other arrangements may be employed for forming and supporting the coils 42 to 46. For example, conductive patterns corresponding to the focusing coil 42 and the tracking coils 43 to 46 may be printed on a flexible substrate. Thereafter, the printed substrate is arcuately bent or rolled into a cylindrical form to form the cylindrical side wall 14 which is suitably secured to the periphery of the end wall 13, and already has the coils 42 to 46 thereon. Thus, the manufacture of the coils 42 to 46 on the body member 12 is substantially facilitated. Alternatively, it is possible to use edgewise or flattened wires to form bobbin-less air-core coils in which successive turns of the flattened wire are simply superposed on each other at their relatively flat surfaces. If the tracking coils 43 to 46 are thus formed of flattened wire, the space factor thereof, that is, the ratio of the cross-sectional area of metal to the overall cross-sectional area of the coil, is increased with the result that sensitivity of tracking correction is improved.

By way of summary, it is to be noted that, in an embodiment of objective lens assembly according to the invention, the objective lens 11 has its optical axis spaced substantially in the radial direction from the axis of the shaft 23 on which the movable body member 12 is supported, the inner and outer yokes respectively disposed inside and outside the cylindrical side wall 14 of the body member 12 have the gaps 28 and 29 aligned with the gaps 40 and 41, respectively. The focusing coil 42 and the portions *a* of the tracking coils 43 to 46 through which a driving current flows in one direction are located between the inner and outer yoke members 24 and 38 and the inner and outer yoke members 25 and 39, and the portions *b* of the tracking coils 43 to 46 through which the driving current flows in the opposite direction are located adjacent to the gaps 28 and 29 of the inner yoke and the gaps 40 and 41 of the outer yoke 36. By reason of this, the eccentricity of the lens 11 relative to the axis of the shaft 23 about which the body member 12 is turnable, and the driving moments acting on the body member 12 may be increased for improving the sensitivity with which tracking errors are corrected.

Furthermore, since the bearing sleeve 16 and preferably also the shaft 23 on which the sleeve 16 is slidable for moving the supporting body member 12 are formed of non-magnetic materials, magnetization thereof by the magnet 35 is prevented so that highly reliable tracking corrections can be effected over an extended period of time without degradation of the tracking servo characteristic.

**Claims**

1. A lens assembly (10) comprising:
a non-magnetic body member (12) having an end wall (13) with a substantially circular periphery and a cylindrical side wall (14) depending from the periphery of said end wall (13);
support means including a base member (20) located under said body member (12) and cooperatively engageable bearing members (16, 23) extending from said end wall (13) and from said base member (20), respectively, close to the central axis of said side wall (14) and being relatively movable to permit at least rotary movements of said body member (12) relative to said base member (20) about said central axis;

a lens (11) mounted eccentrically in said end wall (13) radially between said side wall (14) and said bearing members (16, 23) with the optical axis of said lens (11) extending parallel to said central axis;

inner and outer yoke means (24, 25, 38, 39) extending upwardly from said base member (20) at the inside and outside, respectively, of said side wall (14) with radial clearance therebetween, at least said outer yoke means (38, 39) having a gap (40, 41) therein;

magnet means (35) associated with said yoke means (24, 25, 38, 39) for generating magnetic flux through said side wall (14) of said body member (12) between said inner and outer yoke means (24, 25, 38, 39);

coil means (43 to 46) on said side wall (14) of said body member (12) and shaped to have first and second portions extending substantially parallel to said central axis and through which a driving current supplied to said coil means (43 to 46) will flow in opposed directions, each of said first portions of said coil means (43 to 46) being located between said inner and outer yoke means (24, 25, 38, 39) for interacting with said magnetic flux and thereby effecting said rotary movements in response to said driving current, each said second portion of said coil means (43 to 46) being located adjacent to said gap (40, 41) to be substantailly free of said magnetic flux; and

means (29, 30) defining a path through said inner yoke means (26, 27) for a light beam directed substantially along said optical axis of the lens (11) and passing between said bearing members (16, 23) and said side wall (14).

2. A lens assembly according to claim 1 wherein said inner yoke means (24, 25) also has a gap (28, 29) therein substantially in radial alignment with said gap (40, 41) in said outer yoke means (38, 39).

3. A lens assembly according to claim 2 wherein said gap (29) in the inner yoke means (24, 25) is included in said means (29, 30) defining a path for the light beam.

4. A lens assembly according to claim 3 wherein said means (29, 30) defining a path for the light beam further includes an opening (30) through said base member (20) aligned with said gap (29) in the inner yoke means (24, 25).

5. A lens assembly according to claim 1 wherein said bearing members (16, 23) are relatively movable also to permit axial movements of said body member (12) relative to said base member (20) in the direction of said central axis; and further comprising additional coil means (42) extending circumferentially on said side wall (14) between said inner and outer yoke means (24, 25, 38, 39) for interacting with said magnetic flux and thereby effecting said axial movements in response to the supplying of an additional driving current to said additional coil means (42).

6. A lens assembly according to claim 5 wherein said inner yoke means (24, 25) also has a gap (28, 29) therein substantially in radial alignment with said gap (40, 41) in said outer yoke means (38, 39), and said gap (29) in said inner yoke means (24, 25) is included in said means (29, 30) defining a path for the light beam which further includes an opening (30) through said base member (20) aligned with said gap (29) in said inner yoke means (24, 25).

7. A lens assembly according to claim 6 wherein each of said inner and outer yoke means (24, 25, 38, 39) has a second gap (28, 29, 40, 41) therein which is diametrically opposed to the first-mentioned gap in the respective yoke means.

8. A lens assembly according to claim 7 further comprising resilient positioning means (31) for yieldably establishing a neutral position of said body member (12) relative to said base member (20) and being disposed in said second gap (28) of said inner yoke means (24, 25).

9. A lens assembly according to claim 8 wherein said base member (20) has an aperture (49) therethrough communicating with said second gap (28) in the inner yoke means (24, 25) for providing access to said resilient positioning means (47, 50).

10. A lens assembly according to claim 7 wherein the first-mentioned coil means (43 to 46) includes four substantially rectangular coils (43 to 46) each having said first and second portions at opposed sides thereof and connected by curved top and bottom portions, said four rectangular coils (43 to 46) are arranged on said side wall (14) with said curved top and bottom portions extending circumferentially and with their centres spaced apart by 90°, two of said rectangular coils (43 to 46) having said second portions thereof adjacent to each other and located adjacent to the first-mentioned gaps (28, 29, 40, 41) of said inner and outer yoke means (24, 25, 38, 39), and the other two of said rectangular coils (43 to 46) having their respective second portions adjacent to each other and located adjacent to said second gaps (28, 29, 40, 41) of said inner and outer yoke means (24, 25, 38, 39).

11. A lens assembly according to claim 1 wherein said inner yoke means (24, 25) has a first gap (28, 29) therein substantially in radial alignment with said gap (40, 41) in said outer yoke means (38, 39) and a second gap (28, 29) in said inner yoke means (24, 25) which is substantially diametrically opposed to said first gap (28, 29); and further comprising resilient positioning means (31) for yieldably establishing a neutral position of said body member (12) relative to said base member (20) and being disposed in said second gap (28, 29) of said inner yoke means (24, 25).

12. A lens assembly according to claim 11 wherein said bearing members (16, 23) include a central shaft (23) extending upwardly from said base member (20), and a bearing sleeve (16) extending downwardly from the centre of said end wall (13) and slidable on said shaft (23).

13. A lens assembly according to claim 12 wherein said inner yoke means (24, 25) has a central channel extending between said first and second gaps (28, 29) thereof and defining opposed faces at opposite sides of said channel, and said resilient positioning means (31) includes a generally U-shaped resilient member having legs (31a, 31b) adhered to said opposed faces and a connecting portion (31c) extending into said second gap (28, 29) and a pin (33) extending upwardly from said connecting portion (31c) with said central axis, said end wall (13) of the body member (12) having a socket (34) spaced radially from said central axis and receiving the upper end of said pin (33).

14. A lens assembly according to claim 12 wherein said resilient positioning means includes a resilient element (47) extending radially from said bearing sleeve (16) into said second gap (28) of the inner yoke means (26, 27), and a pin (48) depending from the radially outer end portion of said resilient element (47) and secured at its lower end to said base member (20).

15. A lens assembly according to claim 12 wherein said resilient positioning means (50) includes a generally T-shaped member having a stem protion (50a) extending radially outward from said bearing sleeve (16) into said second gap (28) of the inner yoke means (26, 27), and a head portion extending across said stem portion (50a) and having ends (50b, 50c) secured to end faces of said inner yoke means (26, 27) at opposite sides of said second gap (28).

16. A lens assembly according to claim 12 wherein said resilient positioning means (51) includes a generally T-shaped member having a stem portion (51a) extending radially outwardly from said bearing sleeve (16) into said second gap (28) of the inner yoke means (26, 27) and a head portion (51b) extending across said stem portion (51a), and a bracket (52) secured on said base member (20) within said second gap (28) and having spaced apart side members (52b, 52c) with cut-outs (53) therein receiving opposite ends (51c, 51d) of said head portion (51b) for securing said head portion (51b) to said base member (20).

## Revendications

1. Ensemble d'objectif (10) comportant: un corps non magnétique (12) comprenant une paroi d'extrémité (13) avec une périphérie pratiquement circulaire et une paroi latérale cylindrique (14) dépendant de la périphérie de ladite paroi d'extrémité (13); un dispositif support comprenant une pièce de base (20) disposée au-dessous dudit corps (12) et pouvant engager pour coopérer des pièces support (16, 23) s'étendant à partir de ladite paroi d'extrémité (13) et de ladite pièce de base (20) respectivement, près de l'axe central de ladite paroi latérale (14) et étant mobiles relativement pour permettre au moins des mouvements de rotation dudit corps (12) par rapport à ladite pièce de base (20) autour dudit axe central; un objectif (11) monté excentriquement dans ladite paroi d'extrémité (13) radialement entre ladite paroi latérale (14) et lesdites pièces support (16, 23) avec l'axe optique dudit objectif (11) parallèle audit axe central; des culasses intérieure et extérieure (24, 25, 38, 39) dirigées vers le haut à partir de ladite pièce de base (20) et respectivement à l'intérieur et à l'extérieur de ladite paroi latérale (14) avec un jeu radial entre elles, au moins ladite culasse extérieure (28, 39) comportant un intervalle (40, 41); un aimant (35) associé avec lesdites culasses (24, 25, 38, 39) pour produire un flux magnétique à travers ladite paroi latérale (14) dudit corps (12) entre ladite culasse intérieure et ladite culasse extérieure (24, 25, 38, 39); des enroulements (43 à 46) sur ladite paroi latérale (14) dudit corps (12) formés de manière à comporter des premières et des secondes parties s'étendant parallèlement audit axe central et par lesquelles un courant d'attaque fourni auxdits enroulements (43 à 46) circule dans des sens opposés, chacune desdites premières parties desdits enroulements (43 à 46) étant situées entre ladite culasse intérieure et ladite culasse extérieure (24, 25, 38, 39) pour réagir avec ledit flux magnétique et produire ainsi lesdits mouvements de rotation en réponse audit courant d'attaque, chacune desdites secondes parties desdits enroulements (43 à 46) étant situées près dudit intervalle (40, 41) pour être pratiquement exempte dudit flux magnétique, et un dispositif (29, 30) définissant un trajet par ladite culasse intérieure (26, 27) pour un faisceau lumineux dirigé le long dudit axe optique de l'objectif (11) et passant entre lesdites pièces support (16, 23) et ladite paroi latérale (14).

2. Ensemble d'objectif selon la revendication 1, dans lequel ladite culasse intérieure (24, 25) comporte également un intervalle (28, 29) pratiquement en alignement radial avec ledit intervalle (40, 41) dans ladite culasse extérieure (38, 39).

3. Ensemble d'objectif selon la revendication 2, dans lequel ledit intervalle (29) dans la culasse intérieure (24, 25) fait partie dudit dispositif (29, 30) définissant un trajet pour le faisceau lumineux.

4. Ensemble d'objectif selon la revendication 3, dans lequel ledit dispositif (29, 30) définissant un trajet pour le faisceau lumineux comporte en outre une ouverture (30) dans ladite pièce de base (20) alignée evec ledit intervalle (29) dans la culasse intérieure (24, 25).

5. Ensemble d'objectif selon la revendication 1, dans lequel lesdites pièces support (16, 23) sont relativement mobiles également pour permettre des mouvements axiaux dudit corps (12) par rapport à ladite pièce de base (20) dans la direction dudit axe central, et comprenant en outre un enroulement supplémentaire (42) disposé circonférentiellement sur ladite paroi latérale (14) entre ladite culasse intérieure et ladite culasse extérieure (24, 25, 38, 39) pour réagir avec ledit flux magnétique pour produire ainsi lesdits mouvements axiaux en réponse à l'application d'un courant d'attaque supplémentaire audit enroulement supplémentaire (42).

6. Ensemble d'objectif selon la revendication 5, dans lequel ladite culasse intérieure (24, 25) comporte également un intervalle (28, 29) pratiquement en alignement radial avec ledit intervalle (40, 41) dans ladite culasse extérieure (38, 39) et ledit intervalle (29) dans ladite culasse intérieure (24, 25) étant inclus dans ledit dispositif (29, 30) définissant un trajet pour le faisceau limineux qui comporte en outre une ouverture (30) dans ladite pièce de base (20) alignée avec ledit intervalle (29) dans ladite culasse intérieure (24, 25).

7. Ensemble d'objectif selon la revendication 6, dans lequel chacune de ladite culasse intérieure et de ladite culasse extérieure (24, 25, 38, 39) comporte un second intervalle (28, 29, 40, 41) qui est opposé diamétralement au premier intervalle dans la culasse respective.

8. Ensemble d'objectif selon la revendication 7, comportant en outre un dispositif de positionnement élastique (31) pour établir élastiquement une position neutre dudit corps (12) par rapport à ladite pièce de base (20) et étant disposé dans ledit second intervalle (28) de ladite culasse intérieure (24, 25).

9. Ensemble d'objectif selon la revendication 8, dans lequel ladite pièce de base (20) comporte une ouverture (29) communiquant avec ledit second intervalle (28) dans la culasse intérieure (24, 25) pour permettre l'accès audit dispositif de positionnement élastique (47, 50).

10. Ensemble d'objectif selon la revendication 7, dans lequel lesdits premiers enroulements (43 à 46) consistent en quatre enroulements rectangulaires (43 à 46) comprenant chacun lesdites premières et secondes parties à leurs côtés opposés, et connectés à des parties supérieures et inférieures incurvées, lesdits quatre enroulements rectangulaires (43 à 46) étant disposés sur ladite paroi latérale (14) avec lesdites parties supérieures et inférieures incurvées disposées circonférentiellement et avec leurs centres espacés de 90°, deux desdits enroulements rectangulaires (43 à 46) ayant leurs secondes parties voisines l'une de l'autre et situées près desdits premiers intervalles (28, 29, 40, 41) de ladite culasse intérieure et de ladite culasse extérieure (24, 25, 38, 39) et les deux autres enroulements rectangularies (43 à 46) ayant leurs secondes parties respectives voisines l'une de l'autre et situées près desdits seconds intervalles (28, 29, 40, 41) de ladite culasse intérieure et de ladite culasse extérieure (24, 25, 38, 39).

11. Ensemble d'objectif selon la revendication 1, dans lequel ladite culasse intérieure (24, 25) comporte un premier intervalle (28, 29) pratiquement en alignement radial avec ledit intervalle (40, 41) dans ladite culasse extérieure (38, 39) et un second intervalle (28, 29) dans ladite culasse intérieure (24, 25) diamétralement opposée audit premier intervalle (28, 29) et comprenent en outre un dispositif de positionnement élastique (31) pour établir élastiquement une position neutre dudit corps (12) par rapport à ladite base (20) et étant disposé dans ledit second intervalle (28, 29) de ladite culasse intérieure (24, 25).

12. Ensemble d'objectif selon la revendication 11, dans lequel lesdites pièces support (16, 23) comprennent une tige centrale (23) dirigée vers le haut à partir de ladite pièce de base (20) et à manchon support (16) dirigé vers le bas à partir du centre de ladite paroi d'extrémité (13) et pouvant coulisser sur ladite tige (23).

13. Ensemble d'objectif selon la revendication 12, dans lequel ladite culasse intérieure (24, 25) comporte une gouttière centrale disposée entre ledit premier et ledit second intervalles (28, 29) et définissant des faces opposées à des côtés opposés de ladite gouttière, et ledit dispositif de positionnement élastique (31) comprenant une pièce élastique en forme de U dont des branches (31a, 31b) sont collées sur lesdites faces opposées, et une partie de liaison (31c) disposée dans ledit second intervalle (28, 29) ainsi qu'une goupille (33) dirigée vers le haut à partir de ladite partie de liaison (31c) avec ledit axe central, ladite paroi d'extrémité (13) du corps (12) comprenant une logement (34) espacé radialement dudit axe central et recevant l'extrémité supérieure de ladite goupille (33).

14. Ensemble d'objectif selon la revendication 12, dans lequel ledit dispositif de positionnement élastique comporte un élément élastique (47) disposé radialement à partir dudit manchon support (16) dans ledit second intervalle (28) de la culasse intérieure (26, 27) et une goupille (48) dépendant de ladite partie d'extrémité extrérieure radialement dudit élément élastique (47) et fixée à son extrémité inférieure sur ladite pièce de base (20).

15. Ensemble d'objectif selon la revendication 12, dans lequel ledit dispositif de positionnement élastique (50) comporte une pièce en forme générale de T avec une partie de tige (50a) disposée radialement vers l'extérieur à partir dudit manchon support (16) dans le second intervalle (28) de la culasse intérieure (26, 27), et une partie de tête disposée en travers de ladite partie de tige (50a) et dont des extrémités (50b, 50c) sont fixées sur les faces d'extrémité de ladite culasse intérieure (26, 27) sur les côtés opposés dudit second intervalle (28).

16. Ensemble d'objectif selon la revendication 12, dans lequel ledit dispositif de positionnement élastique (51) comporte une pièce en forme générale de T comprenant une partie de tige (51a) disposée radialement vers l'extérieur à partir dudit manchon support (16) dans ledit second intervalle (28) de ladite culasse intérieure (26, 27) et une partie de tête (51b) disposée en travers de ladite partie de tige (51a) et un support (52) fixé sur ladite base (20) dans ledit second intervalle (28) et comprenant des pièces latérales espacées (52b, 52c) avec des encoches (53) pour recevoir les extrémités opposées (51c, 51d) de ladite partie de têter (51b) pour fixer ladite partie de tête (51b) sur ladite pièce de base (20).

## Patentansprüche

1. Objektivhalterung (10) für optische Plattenspieler, bestehend aus

einem nichtmagnetischen Körper (12), der eine Stirnwand (13) mit einem im wesentlichen kreisrunden Umfang und eine zylindrische Seitenwandung (14), die von dem Umfang der Stirnwand (13) ausgeht, aufweist;

Halteelementen, die ein Basisteil (20), welches unter dem Körper (12) angeordnet ist, und zusammenwirkend in Eingriff miteinander stehende Lagerungsteile (16, 23), welche sich von der Stirnwand (13) bzw. von dem Basisteil (20) dicht an der Mittelachse der Seitenwandung (14) aus erstrecken und relativ zueinander beweglich sind, um zumindest Drehbewegungen des Körpers (12) relativ zu dem Basisteil (20) um die Mittelachse zu gestatten, enthalten;

einer Linse (11), die exzentrisch in der Stirnwand (13) in radialer Richtung zwischen der Seitenwandung (14) und den Lagerteilen (16, 23) montiert ist, wobei sich die optische Achse der Linse (11) parallel zu der Mittelachse erstreckt;

inneren und äußeren Jochteilen (24, 25, 38, 39), die sich nach oben von dem Basisteil (20) aus an der Innenseite bzw. der Außenseite der Seitenwandung (14) mit einem radialen Abstand zwischen sich erstrecken, wobei zumindest die äußeren Jochteile (38, 39) einen Spalt (40, 41) in sich aufweisen;

einem Magneten (35), der den Jochteilen (24, 25, 38, 39) zum Erzeugen eines magnetischen Flusses durch die Seitenwandung (14) des Körpers (12) zwischen den inneren und den äußeren Jochteilen (24, 25, 38, 39) zugeordnet ist;

Spulen (43 bis 46) auf der Seitenwandung (14) des Körpers (12), die so geformt sind, daß sie erste und zweite Abschnitte haben, die sich im wesentlichen parallel zu der zentralen Achse erstrecken und durch die ein Treiberstrom, der den Spulen (43 bis 46) zugeführt wird, in einander entgegengesetzten Richtungen fließt, wobei jeder der ersten Abschnitte der Spulen (43 bis 46) zwischen den inneren und den äußeren Jochteilen (24, 25, 38, 39) zum Zusammenwirken mit dem magnetischen Fluß angeordnet ist und wobei die Drehbewegungen in Abhängigkeit von dem Treiberstrom bewirkt werden, wobei jeder der zweiten Abschnitte der Spulen (43 bis 46) in Nachbarschaft des Spaltes (40, 41) angeordnet ist, um ihn im wesentlichen von dem magnetischen Fluß frei zu halten;

Elementen (29, 30), die einen Pfad durch die inneren Jochteile (26, 27) für einen Lichtstrahl definieren, der im wesentlichen längs der optischen Achse der Linse (11) ausgerichtet ist und zwischen den Lagerungsteilen (16, 23) und der Seitenwandung (14) verläuft.

2. Objektivhalterung nach Anspruch 1, dadurch gekennzeichnet, daß die inneren Jochteile (24, 25) ebenfalls jeweils einen Spalt (28, 29) in sich aufweisen, der im wesentlichen in radialer Richtung auf den jeweiligen Spalt (40, 41) in den äußeren Jochteilen (38, 39) ausgerichtet ist.

3. Objektivhalterung nach Anspruch 2, dadurch gekennzeichnet, daß der Spalt (29) in den inneren Jochteilen (24, 25) in den Elementen (29, 30) vorgesehen ist, die einen Pfad für den Lichtstrahl definieren.

4. Objektivhalterung nach Anspruch 3, dadurch gekennzeichnet, daß die Elemente (29, 30), die einen Pfad für den Lichtstrahl definieren, desweiteren eine Öffnung (30) durch das Basisteil (20) enthalten, die in Ausrichtung mit dem Spalt (29) in den inneren Jochteilen (24, 25) angeordnet ist.

5. Objektivhalterung nach Anspruch 1, dadurch gekennzeichnet, daß die Lagerungsteile (16, 23) ebenfalls relativ zueiander beweglich sind, um axiale Bewegungen des Körpers (12) relativ zu dem Basisteil (20) in Richtung der Mittelachse zu gestatten, und daß eine zusätzliche Spulen (42) vorgesehen ist, die sich um den Umfang der Seitenwandung (14) zwischen den inneren und den äußeren Jochteilen (24, 25, 38, 39) zum Zusammenwirken mit dem magnetischen Fluß und damit zum Bewirken der axialen Bewegungen in Abhängigkeit von dem Zuführen eines zusätzlichen Treiberstroms zu der zusätzlichen Spule (42) erstreckt.

6. Objektivhalterung nach Anspruch 5, dadurch gekennzeichnet, daß die inneren Jochteile (24, 25) ebenfalls einen Spalt (28, 29) in sich in radialer Ausrichtung mit dem (Spalt 40, 41) in den äußeren Jochteilen (38, 39) enthalten und daß der Spalt (29) in den inneren Jochteilen (24, 25) in den Elementen (29, 30) enthalten ist, der einen Pfad für den Lichtstrahl definiert, welcher desweiteren eine Öffnung (30) durch das Basisteil (20) enthält, die in Ausrichtung mit dem Spalt (29) in den inneren Jochteilen (24, 25) angeordnet ist.

7. Objektivhalterung nach Anspruch 6, dadurch gekennzeichnet, daß jedes der inneren und der äußeren Jochteile (24, 25, 38, 39) einen zweiten Spalt (28, 29, 40, 41) in sich hat, der dem zuerst genannten Spalt in den betreffenden Jochteilen diametral gegenübersteht.

8. Objektivhalterung nach Anspruch 7, dadurch gekennzeichnet, daß ein elastisches Positionierungsteil (31) zum federnden Festlegen einer neutralen Position des Körpers (12) relativ zu dem Basisteil (20) vorgesehen und in dem zweiten Spalt (28) der inneren Jochteile (24, 25) angeordnet ist.

9. Objektivhalterung nach Anspruch 8, dadurch gekennzeichnet, daß das Basisteil (20) eine Öffnung (49) aufweist, die mit dem zweiten Spalt (28) der inneren Jochteile (24, 25) zum Ermöglichen eines Zugangs zu dem elastische Positionierungsteil (47, 50) in Verbindung steht.

10. Objektivhalterung nach Anspruch 7, dadurch gekennzeichnet, daß die zuerst genannten Spulen (43 bis 46) vier im wesentlichen rechteckförmige Spulen (43 bis 46) sind, wovon jede den ersten und den zweiten Abschnitt auf deren sich gegenüberliegenden Seiten aufweist und welche Abschnitte durch gekrümmte obere und untere Abschnitte verbunden sind, wobei die vier rechteckigförmigen Spulen (43 bis 46) auf der Seitenwandung (14) angeordnet sind und wobei sich die gekrümmten oberen und unteren Abschnitte über den Umfang und mit deren Zentren um 90° voneinander versetzt erstrecken, daß die zweiten Abschnitte zweier der rechteckförmigen Spulen (43 bis 46) miteinander benachbart sind und den zuerst genannten Spalten (28, 29, 40, 41) der inneren und äußeren Jochteile (24, 25, 38, 39) benachbart angeordnet sind und daß die jeweiligen zweiten Abschnitte der anderen beiden rechteckigförmen Spulen (43 bis 46) miteinander benachbart und den zweiten Spalten (28, 29, 40, 41) der inneren und äußeren Jochteile (24, 25, 38, 39) benachbart angeordnet sind.

11. Objektivhalterung nach Anspruch 1, dadurch gekennzeichnet, daß die inneren Jochteile (24, 25) einen ersten Spalt (28, 29) in sich haben, der im wesentlichen in radialer Ausrichtung mit dem Spalt (40, 41) in den äußeren Jochteilen (38, 39) angeordnet ist, daß ein zweiter Spalt (28, 29) in den inneren Jochteilen (24, 25) vorgesehen ist, der dem ersten Spalt (28, 29) im wesentlichen diametral gegenübersteht, und daß desweiteren ein elastisches Positionierungsteil (31) zum federnden Festlegen einer neutralen Position des Körpers (12) relativ zu dem Basisteil (20) vorgesehen und in dem zweiten Spalt (28, 29) der inneren Jochteile (24, 25) angeordnet ist.

12. Objektivhalterung nach Anspruch 11, dadurch gekennzeichnet, daß die Lagerungsteile (16, 23) eine zentrale Welle (23), die sich nach oben von dem Basisteil (20) aus erstreckt, und eine Lagerbuchse (16), die sich nach unten von dem Zentrum der Stirnwand (13) aus erstreckt und auf der Welle (23) verschiebbar ist, enthalten.

13. Objektivhalterung nach Anspruch 12, dadurch gekennzeichnet, daß die inneren Jochteile (24, 25) eine zentrale Aussparung aufweisen, die sich zwischen deren ersten und zweiten Spalten (28, 29) erstreckt und sich gegenüberstehende Flächen an sich gegenüberliegenden Seiten der Aussparung definiert, daß das elastische Positionierungsteil (31) ein im allgemeinen U-förmiges elastisches Teil ist, das Schenkel (31a, 31b), die an die sich gegenüberliegenden Seiten angeklebt sind, und einen Verbindungsabschnitt (31c), der sich in den zweiten Spalt (28, 29) hinein erstreckt, sowie einen Stift (33), der sich nach oben von dem Verbindungsabschnitt (31c) aus mit der Mittelachse erstreckt, hat, und daß die Seitenwandung (13) des Körpers (12) eine Steckbohrung (34) hat, die in radialer Richtung von der Mittelachse einen Abstand aufweist und das obere Ende des Stiftes (33) aufnimmt.

14. Objektivhalterung nach Anspruch 12, dadurch gekennzeichnet, daß das elastische Positionierungsteil ein elastisches Element (47), das sich radial von der Lagerbuchse (16) aus in den zweiten Spalt (28) der inneren Jochteile (26, 27) erstreckt, und einen Stift (48), der von dem in radialer Richtung äußeren Endabschnitt des elastischen Elements (47) ausgeht und an seinem unteren Ende an dem Basisteil (20) befestigt ist, enthält.

15. Objektivhalterung nach Anspruch 12, dadurch gekennzeichnet, daß das elastische Positionierungsteil (50) ein im allgemeinen T-förmiges Teil ist, das einen Quergliedabschnitt (50a), der sich radial nach außen von der Lagerbuchse (16) aus in den zweiten Spalt (28) der inneren Jochteile (26, 27) erstreckt, und einen Kopfabschnitt, der sich quer über den Quergliedabschnitt (50a) erstreckt und Enden (50b, 50c) hat, die an den Endflächen der inneren Jochteile (26, 27) an sich gegenüberliegenden Seiten des zweiten Spaltes (28) befestigt sind, aufweist.

16. Objektivhalterung nach Anspruch 12, dadurch gekennzeichnet, daß das elastische Positionierungsteil (51) ein im allgemeinen T-förmiges Teil ist, das einen Quergliedabschnitt (51a), der sich radial nach außen von der Lagerbuchse (16) aus in den zweiten Spalt (28) der inneren Jochteile (26, 27) erstreckt, einen Kopfabschnitt (51b), der sich quer über den Quergliedabschnitt (51a) erstreckt, sowie einen Bügel (52) aufweist, der auf dem Basisteil (20) innerhalb des zweiten Spaltes (28) befestigt ist und in einem Abstand voneinander angeordnete Seitenteile mit Ausschnitten (53) darin hat, welche sich gegenüberliegende Enden (51c, 51d) des Kopfabschnittes (51b) zum Befestigen des Kopfabschnittes (51b) an dem Basisteil (20) aufnehmen.

# F I G . 1

# FIG.2

# FIG.3

# FIG.4

# FIG.5

# FIG.6

# FIG.7